# EUROPEAN PATENT APPLICATION

(11) **EP 4 836 481 A1**
(43) Date of publication of application: **04.11.2026**
(21) Application number: 26174421.3
(22) Date of filing: 24.04.2026
(51) Int. Cl.: H04W 12/50, H04W 4/80, H04W 12/71

(54) **METHOD AND SYSTEM FOR SELF-PAIRING OF SOUND DEVICES**

(30) Priority: 29.04.2025 CN 202510564500
(71) Applicant: Harman International Industries, Incorporated, Stamford, CT 06901 (US)
(72) Inventor: LIU, Meng-Yuan, Shenzhen, 518067 (CN); CHOO, Heng Tong, 689575 Singapore (SG); MAI, Runjuan, Shenzhen, 518067 (CN); SUN, Hongliang, Shenzhen, 518067 (CN)
(74) Representative: Maucher Jenkins Patent- und Rechtsanwälte Partnerschaft mbB

(57) **Abstract**

The present disclosure provides a method for self-pairing of sound devices, including: transmitting, by a first sound device and a second sound device, respectively, a first wireless broadcast signal and a second wireless broadcast signal and scanning for wireless broadcast signals transmitted by other sound devices, respectively; in a case where the first sound device receives the second wireless broadcast signal transmitted by the second sound device, determining, based on the received second wireless broadcast signal, that the second sound device is within a self-pairable spatial range and is a self-pairable device; in a case where the first sound device determines that the second sound device is within the self-pairable spatial range and is a self-pairable device, directionally transmitting a pairing request signal to the second sound device; in a case where the second sound device receives the pairing request signal, transmitting a pairing confirmation signal to the first sound device; and establishing, by the first sound device, pairing with the second sound device in response to the pairing confirmation signal.

## Description

### TECHNICAL FIELD

The present disclosure relates to a method and system for self-pairing of sound devices.

### BACKGROUND

In order to provide users with a better immersive listening experience, more and more sound devices support wireless pairing to form group players. Currently, users usually use a pairing button on the sound device or use an application to set up pairing of the sound device. However, these two implementations are not intuitive enough for users who are first exposed to sound devices. In order to enable simple implementation of pairing of sound devices without using a button and/or an application, the present application proposes a method and system for self-pairing of sound devices. Through the proposed method and system, a user can implement self-pairing of sound devices without using a button and/or an application.

### SUMMARY

Other aspects, advantages, and salient features of the present disclosure will become apparent to those skilled in the art from the following detailed description, taken in conjunction with the accompanying drawings, disclosing various embodiments of the present disclosure.

According to an aspect of the present disclosure, a method for self-pairing of sound devices is provided, including: transmitting, by a first sound device, a first wireless broadcast signal and scanning for wireless broadcast signals transmitted by other sound devices; transmitting, by a second sound device, a second wireless broadcast signal and scanning for wireless broadcast signals transmitted by other sound devices; in a case where the first sound device receives the second wireless broadcast signal transmitted by the second sound device, determining, by the first sound device based on the received second wireless broadcast signal, that the second sound device is within a self-pairable spatial range and the second sound device is a self-pairable device, where the first sound device and the second sound device are in a state of being unpaired with each other; in a case where the first sound device determines that the second sound device is within the self-pairable spatial range and is a self-pairable device, directionally transmitting a pairing request signal to the second sound device by the first sound device; in a case where the second sound device receives the pairing request signal transmitted by the first sound device, transmitting a pairing confirmation signal to the first sound device by the second sound device; and establishing, by the first sound device, pairing with the second sound device in response to the pairing confirmation signal from the second sound device.

According to another aspect of the present disclosure, a method performed by a first sound device is provided, including: transmitting a first wireless broadcast signal and scanning for wireless broadcast signals transmitted by other sound devices; in a case where a second wireless broadcast signal transmitted by a second sound device is received, determining, based on the received second wireless broadcast signal, that the second sound device is within a self-pairable spatial range and is a self-pairable device, where the first sound device and the second sound device are in a state of being unpaired with each other; in a case where it is determined that the second sound device is within the self-pairable spatial range and is a self-pairable device, directionally transmitting a pairing request signal to the second sound device; and establishing pairing with the second sound device in response to a pairing confirmation signal from the second sound device.

According to yet another aspect of the present disclosure, a sound device is provided, including: a transceiver; a speaker; and a processor configured to perform the foregoing method.

### BRIEF DESCRIPTION OF THE DRAWINGS

The present disclosure will be more readily understood through the following detailed description taken in conjunction with the accompanying drawings, in which like reference numerals designate elements having the same structure, and in which:
FIG. 1 illustrates a schematic diagram of a system for self-pairing of sound devices according to an embodiment of the present disclosure;
FIG. 2 illustrates a schematic diagram of a system for self-pairing of sound devices according to another embodiment of the present disclosure; and
FIG. 3 illustrates a flowchart of a method for self-pairing of sound devices according to an embodiment of the present disclosure;
FIG. 4 illustrates a flowchart of a method for self-pairing of sound devices according to another embodiment of the present disclosure;
FIG. 5 illustrates a schematic diagram of a sound device according to an embodiment of the present disclosure; and
FIG. 6 illustrates a schematic diagram of a non-transitory computer-readable medium according to an embodiment of the present disclosure.

Throughout the drawings, similar reference numerals will be understood to refer to similar parts, components, and structures.

### DETAILED DESCRIPTION OF EMBODIMENTS

The technical solutions in the embodiments of the present disclosure will be clearly and completely described below in conjunction with the accompanying drawings in the embodiments of the present disclosure. Obviously, the described embodiments are merely some of the embodiments of the present disclosure, rather than all of the embodiments. Based on the embodiments of the present disclosure, all other embodiments derived by those of ordinary skills in the art without any creative efforts fall within the protection scope of the present disclosure.

Furthermore, those of ordinary skills in the art will understand that the elements in the accompanying drawings are illustrated for simplicity and may not necessarily be drawn to scale. For example, the dimensions of some elements in the accompanying drawings may be enlarged relative to other elements to aid in understanding various aspects of the embodiments. Furthermore, one or more elements may have been represented by various symbols in the accompanying drawings, and the accompanying drawings may illustrate only those specific details relevant to understanding the embodiments of the present disclosure, so as not to obscure the accompanying drawings with details that are readily apparent to those of ordinary skills in the art who benefit from the description herein.

In addition, it should be noted that in this specification, A being connected to B can mean "A is directly connected to B" or "A is connected to B via another intermediate member". A being connected between B and C may mean that "A is directly connected to B and C" or "A is connected to B and C via other intermediate components."

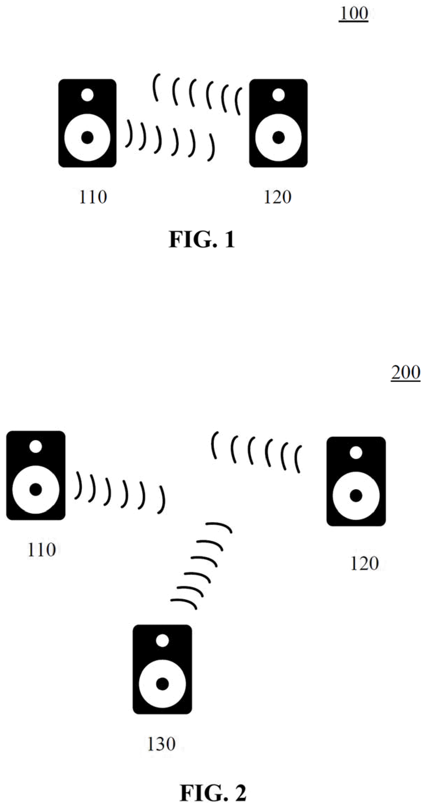

FIG. 1 illustrates a schematic diagram of a system 100 for self-pairing of sound devices according to an embodiment of the present disclosure.

As shown in FIG. 1, the system 100 for self-pairing of sound devices may include a first sound device 110 and a second sound device 120. However, the present disclosure is not limited thereto, and the system 100 for self-pairing of sound devices may include more sound devices. Each of the first sound device 110 and the second sound device 120 may include a transceiver unit for receiving and receiving wireless broadcast signals. In some embodiments, the transceiver units of the first sound device 110 and the second sound device 120 may be implemented by Bluetooth Low Energy (BLE) chips. However, the present disclosure is not limited thereto, and the first sound device 110 and the second sound device 120 may be implemented by any module having a transceiving function.

In some embodiments, the first sound device 110 may continuously transmit a first wireless broadcast signal and scan for wireless broadcast signals transmitted by other sound devices, and the second sound device 120 may also continuously transmit a second wireless broadcast signal and scan for wireless broadcast signals transmitted by other sound devices.

In a case where the first sound device 110 receives the second wireless broadcast signal transmitted by the second sound device 120, the first sound device 110 may determine, based on the second wireless broadcast signal, whether the second sound device 120 is within a self-pairable spatial range of the first sound device 110 and determine whether the second sound device 120 is a self-pairable device. At this time, the first sound device 110 and the second sound device 120 are in a state of being unpaired with each other.

The first sound device 110 may determine strength of the received second wireless broadcast signal. The first sound device 110 may compare the determined strength of the second wireless broadcast signal with a strength threshold. Based on the strength of the second wireless broadcast signal being greater than or equal to the strength threshold and remaining greater than or equal to the strength threshold for a threshold time, the first sound device 110 may determine that the second sound device 120 is within the self-pairable spatial range. In some embodiments, the strength threshold and the threshold time may be pre-configured. In some embodiments, the strength threshold may be set to be greater than a communicable strength threshold between the first sound device 110 and the second sound device 120. In some embodiments, signal strength may be represented by Received Signal Strength Indication (RSSI), and the communicable strength threshold may be -60 dBm to -80 dBm, and accordingly, the strength threshold may be set to a value greater than the communicable strength threshold, for example, -30 dBm. However, the present disclosure is not limited thereto, and depending on the communication method between sound devices, the communicable strength threshold may be different, and accordingly, the strength threshold may be set differently.

In some embodiments, the first wireless broadcast signal transmitted by the first sound device 110 may include identification information of the first sound device 110, and the second wireless broadcast signal transmitted by the second sound device 120 may also include identification information of the second sound device 120. The identification information may include at least one of a device name, a device address, and a device type of the sound device. However, the present disclosure is not limited thereto, and the identification information may include any information capable of uniquely identifying the sound device.

Further, the first sound device 110 may also determine, based on the identification information of the second sound device 120 included in the second wireless broadcast signal, whether the second sound device 120 is a self-pairable device. In some embodiments, the first sound device 110 may be pre-configured with a list of self-pairable devices, and may determine, based on the identification information of the second sound device 120, whether the second sound device 120 is included in the list of self-pairable devices. In some embodiments, the list of self-pairable devices may include at least one of a device name, a device address, and a device type of the self-pairable device. However, the present disclosure is not limited thereto, and the list of self-pairable devices may include any information capable of uniquely identifying the self-pairable device.

Based on determining that the second sound device 120 is within the self-pairable spatial range and the second sound device 120 is a self-pairable device, the first sound device 110 may directionally transmit a pairing request to the second sound device 120.

The second sound device 120 may receive the pairing request transmitted by the first sound device 110. Based on receiving the pairing request transmitted by the first sound device 110, the second sound device 120 may transmit a pairing confirmation signal to the first sound device 110.

In some embodiments, the second sound device 120 may receive the first wireless broadcast signal transmitted by the first sound device 110, and before transmitting the pairing confirmation signal to the first sound device 110 based on the pairing request, determine, based on the first wireless broadcast signal, whether the first sound device 110 is within a self-pairable spatial range of the second sound device 120 and whether the first sound device 110 is a self-pairable device.

Similar to the operation of the first sound device 110, the second sound device 120 may determine, based on the first wireless broadcast signal transmitted by the first sound device 110, whether the first sound device 110 is within the self-pairable spatial range. For example, the second sound device 120 may determine the strength of the received first wireless broadcast signal, and may compare the determined strength of the first wireless broadcast signal with a strength threshold. Based on the strength of the first wireless broadcast signal being greater than or equal to the strength threshold and remaining greater than or equal to the strength threshold for a threshold time, the second sound device 120 may determine that the first sound device 110 is within its self-pairable spatial range.

Further, the second sound device 120 may determine, based on the identification information of the first sound device 110 included in the first wireless broadcast signal, whether the first sound device 110 is a self-pairable device. In some embodiments, the second sound device 120 may be pre-configured with a list of self-pairable devices. In some embodiments, the first sound device 110 and the second sound device 120 may be configured with different lists of self-pairable devices. The second sound device 120 may determine, based on the identification information of the first sound device 110, whether the first sound device 110 is included in the list of self-pairable devices.

Based on determining that the first sound device 110 is within the pairable spatial range and is a self-pairable device, the second sound device 120 may transmit a pairing confirmation signal to the first sound device 110 based on the received pairing request.

The first sound device 110 may establish pairing with the second sound device 120 in response to the pairing confirmation signal from the second sound device 120.

When the first sound device 110 and the second sound device 120 are successfully paired, one of the first sound device 110 and the second sound device 120 may be determined as a main sound device. The main sound device may transmit an audio signal to other sound devices paired with it. In some embodiments, the sound device among the first sound device 110 and the second sound device 120 that receives an audio signal from a mobile phone may be determined as the main sound device. In some embodiments, the main sound device may be determined by a user. For example, by performing settings in an application (APP), the user may determine one of the first sound device 110 and the second sound device 120 as the main sound device. The operation of determining the main sound device by the user may be performed before or after the first sound device 110 and the second sound device 120 establish pairing.

By using the system described with reference to FIG. 1, self-pairing of sound devices can be implemented without using a specific application and buttons on the sound devices, thereby simplifying user operations and improving user experience.

FIG. 2 illustrates a schematic diagram of a system 200 for self-pairing of sound devices according to another embodiment of the present disclosure.

As shown in FIG. 2, the system 200 for self-pairing of sound devices may include a first sound device 110, a second sound device 120, and a third sound device 130. However, the present disclosure is not limited thereto, and the system 200 for self-pairing of sound devices may include more or fewer sound devices. Each of the first sound device 110, the second sound device 120, and the third sound device 130 may include a transceiver unit for receiving and transmitting wireless broadcast signals. In some embodiments, the transceiver units of the first sound device 110, the second sound device 120, and the third sound device 130 may be implemented by Bluetooth Low Energy (BLE) chips. However, the present disclosure is not limited thereto, and the first sound device 110 and the second sound device 120 may be implemented by any module having a transceiving function.

In some embodiments, the first sound device 110 may continuously transmit a first wireless broadcast signal and scan for wireless broadcast signals transmitted by other sound devices, the second sound device 120 may also continuously transmit a second wireless broadcast signal and scan for wireless broadcast signals transmitted by other sound devices, and the third sound device 130 may also continuously transmit a third wireless broadcast signal and scan for wireless broadcast signals transmitted by other sound devices.

In some embodiments, the first sound device 110 and the second sound device 120 may first perform self-pairing, and after the first sound device 110 and the second sound device 120 establish pairing, any one of the first sound device 110 and the second sound device 120 may perform self-pairing with the third sound device 130, thereby establishing a sound device network.

Specifically, the manner in which the first sound device 110 and the second sound device 120 perform self-pairing is similar to that described with reference to FIG. 2, and will not be repeated here to avoid redundancy.

After the first sound device 110 and the second sound device 120 establish pairing, the first sound device 110 and the second sound device 120 may scan for wireless broadcast signals transmitted by other sound devices.

In a case where the first sound device 110 receives a third wireless broadcast signal transmitted by the third sound device 130, the first sound device 110 may determine, based on the received third wireless broadcast signal, whether the third sound device 130 is within a self-pairable spatial range and whether the third sound device is a self-pairable device. At this time, the first sound device 110 and the third sound device 130, and the second sound device 120 and the third sound device 130 are in a state of being unpaired with each other. The first sound device 110 may determine the strength of the received third wireless broadcast signal. The first sound device 110 may compare the determined strength of the third wireless broadcast signal with a strength threshold. Based on the strength of the third wireless broadcast signal being greater than or equal to the strength threshold and remaining greater than or equal to the strength threshold for a threshold time, the first sound device 110 may determine that the third sound device 130 is within the self-pairable spatial range.

Further, the first sound device 110 may also determine, based on identification information of the third sound device 130 included in the third wireless broadcast signal, whether the third sound device 130 is a self-pairable device. In some embodiments, the first sound device 110 may be pre-configured with a list of self-pairable devices, and may determine, based on the identification information of the third sound device 130, whether the third sound device 130 is included in the list of self-pairable devices.

Based on determining that the third sound device 130 is within the self-pairable spatial range and the third sound device is a self-pairable device, the first sound device 110 may directionally transmit a pairing request signal to the third sound device 130.

The third sound device 130 may receive the pairing request transmitted by the first sound device 110. Based on receiving the pairing request transmitted by the first sound device 110, the third sound device 130 may transmit a pairing confirmation signal to the first sound device 110.

In some embodiments, the third sound device 130 may receive the first wireless broadcast signal transmitted by the first sound device 110, and before transmitting the pairing confirmation signal to the first sound device 110 based on the pairing request, determine, based on the first wireless broadcast signal, whether the first sound device 110 is within its self-pairable spatial range and whether the first sound device 110 is a self-pairable device. The operation of the third sound device 130 determining, based on the first wireless broadcast signal, whether the first sound device 110 is within its self-pairable spatial range and whether the first sound device 110 is a self-pairable device is similar to the operation of the second sound device 120 determining, based on the first wireless broadcast signal, whether the first sound device 110 is within its self-pairable spatial range and whether the first sound device 110 is a self-pairable device described with reference to FIG. 1, and will not be repeated here to avoid redundancy.

The first sound device 110 may establish pairing with the third sound device 130 in response to the pairing confirmation signal from the third sound device 130.

Alternatively, in a case where the second sound device 120 receives a third wireless broadcast signal transmitted by the third sound device 130, the second sound device 120 may determine, based on the received third wireless broadcast signal, whether the third sound device 130 is within a self-pairable spatial range and whether the third sound device is a self-pairable device. At this time, the first sound device 110 and the third sound device 130, and the second sound device 120 and the third sound device 130 are in a state of being unpaired with each other. In a case where the second sound device 120 determines that the third sound device 130 is within the self-pairable spatial range and that the third sound device is a self-pairable device, the second sound device 120 may directionally transmit a pairing request signal to the third sound device 130. In a case where the third sound device 130 receives the pairing request signal transmitted by the second sound device 120, the third sound device 130 may transmit a pairing confirmation signal to the second sound device 120, and the second sound device 120 may establish pairing with the third sound device 130 in response to the pairing confirmation signal.

Similar to the case where the first sound device 110 receives the third wireless broadcast signal transmitted by the third sound device 130, the second sound device 120 may also determine the strength of the third wireless broadcast signal, and determine whether the third sound device 130 is within the self-pairable spatial range based on comparison of the strength with the strength threshold and comparison of the duration with the time threshold, and may determine whether the third sound device is a self-pairable device based on the identification information of the third sound device 130 included in the third wireless broadcast signal.

In addition, before the third sound device 130 transmits the pairing confirmation signal to the second sound device 120, the third sound device 130 may also determine, based on the second wireless broadcast signal transmitted by the second sound device 120, whether the second sound device 120 is within its self-pairable spatial range and whether the second sound device 120 is a self-pairable device. The specific operation is similar to the operation of the third sound device 130 determining, based on the first wireless broadcast signal, whether the first sound device 110 is within its self-pairable spatial range and whether the first sound device 110 is a self-pairable device, and will not be repeated here to avoid redundancy.

When the first sound device 110, the second sound device 120, and the third sound device 130 are successfully paired, one of the first sound device 110, the second sound device 120, and the third sound device 130 may be determined as a main sound device. The main sound device may transmit an audio signal to other sound devices paired with it. In some embodiments, the main sound device may be determined by a user. For example, the user may determine one of the first sound device 110, the second sound device 120, and the third sound device 130 as the main sound device by means such as touch. The operation of determining the main sound device by the user may be performed before or after the first sound device 110 and the second sound device 120 establish pairing.

In some embodiments, the first sound device 110, the second sound device 120, and the third sound device 130 may perform self-pairing simultaneously, thereby establishing a sound device network.

When the first sound device 110 simultaneously receives the second wireless broadcast signal transmitted by the second sound device 120 and the third wireless broadcast signal transmitted by the third sound device 130, the first sound device 110 may determine, based on the received second wireless broadcast signal and third wireless broadcast signal, respectively, whether the second sound device and the third sound device are within the self-pairable spatial range and whether the second sound device and the third sound device are self-pairable devices. At this time, the first sound device 110, the second sound device 120, and the third sound device 130 are in a state of being unpaired with each other. The determination by the first sound device 110, based on the second wireless broadcast signal and the third wireless broadcast signal, of whether the second sound device and the third sound device are within the self-pairable spatial range and whether the second sound device and the third sound device are self-pairable devices is similar to the operations described above, and will not be repeated here to avoid redundancy.

In a case where it is determined that the second sound device 120 and the third sound device 130 are within the self-pairable spatial range and are self-pairable devices, the first sound device 110 may directionally transmit a pairing request signal to the second sound device 120 and the third sound device 130.

In a case where the second sound device 120 and the third sound device 130 respectively receive the pairing request signal transmitted by the first sound device 110, the second sound device 120 and the third sound device 130 may respectively transmit a pairing confirmation signal to the first sound device 110. Before the second sound device 120 and the third sound device 130 transmit the pairing confirmation signals to the first sound device 110, the second sound device 120 and the third sound device 130 may also respectively determine, based on the first wireless broadcast signal transmitted by the first sound device 110, whether the first sound device 110 is within the pairable spatial range and whether the first sound device 110 is a self-pairable device. The specific operation is similar to the operation of the second sound device 120 determining, based on the first wireless broadcast signal transmitted by the first sound device 110, whether the first sound device 110 is within the pairable spatial range and whether the first sound device 110 is a self-pairable device, and will not be repeated here to avoid redundancy.

The first sound device 110 may establish pairing with the second sound device 120 and the third sound device 130 respectively in response to the pairing confirmation signals from the second sound device 120 and the third sound device 130.

When the first sound device 110, the second sound device 120, and the third sound device 130 are successfully paired, one of the first sound device 110, the second sound device 120, and the third sound device 130 may be determined as a main sound device. The main sound device may transmit an audio signal to other sound devices paired with it. In some embodiments, the sound device among the first sound device 110 and the second sound device 120 that receives an audio signal from a mobile phone may be determined as the main sound device. In some embodiments, the main sound device may be determined by a user. For example, the user may determine one of the first sound device 110, the second sound device 120, and the third sound device 130 as the main sound device by performing settings in an application (APP). The operation of determining the main sound device by the user may be performed before or after the first sound device 110 and the second sound device 120 establish pairing.

By using the system described with reference to FIG. 2, self-pairing of a plurality of sound devices can be implemented without using a specific application and buttons on the sound devices, thereby simplifying user operations and improving user experience.

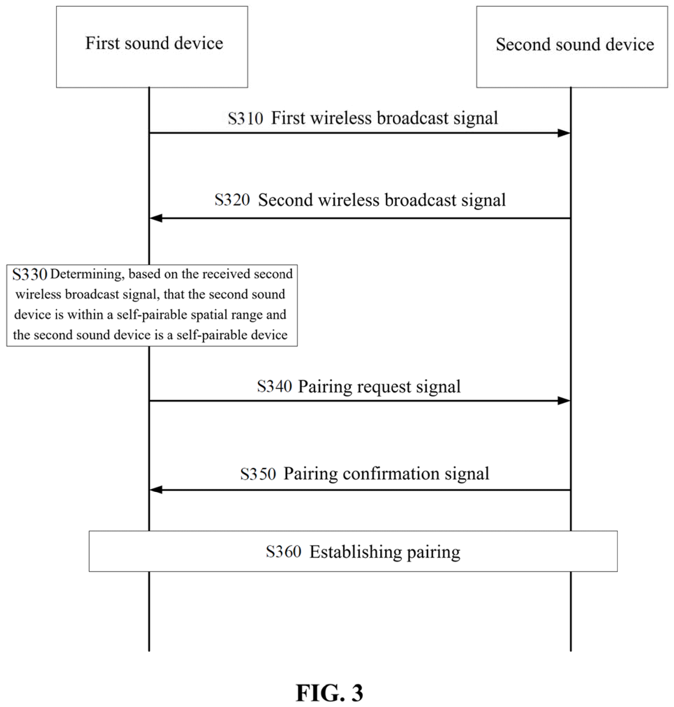

FIG. 3 illustrates a flowchart of a method for self-pairing of sound devices according to an embodiment of the present disclosure.

In step S310, a first sound device transmits a first wireless broadcast signal. In some embodiments, the first sound device may continuously transmit the first wireless broadcast signal and may scan for wireless broadcast signals transmitted by other sound devices.

In step S320, a second sound device transmits a second wireless broadcast signal. In some embodiments, the second sound device may continuously transmit the second wireless broadcast signal and may scan for wireless broadcast signals transmitted by other sound devices. In some embodiments, step S310 may be performed in parallel with S320.

In step S330, the first sound device determines, based on the received second wireless broadcast signal, that the second sound device is within a self-pairable spatial range and the second sound device is a self-pairable device. In some embodiments, in a case where the first sound device receives the second wireless broadcast signal transmitted by the second sound device, the first sound device may determine, based on the received second wireless broadcast signal, whether the second sound device is within the self-pairable spatial range and whether the second sound device is a self-pairable device. At this time, the first sound device and the second sound device are in a state of being unpaired with each other. The first sound device may determine the strength of the second wireless broadcast signal, and compare the strength of the second wireless broadcast signal with a strength threshold. Based on the strength of the second wireless broadcast signal being greater than or equal to the strength threshold and lasting for a threshold time, the first sound device may determine that the second sound device is within the self-pairable spatial range of the first sound device.

Further, the first sound device may also determine, based on identification information of the second sound device included in the second wireless broadcast signal, that the second sound device is a self-pairable device.

In step S340, the first sound device directionally transmits a pairing request signal to the second sound device. In some embodiments, in a case where the first sound device determines that the second sound device is within the self-pairable spatial range and is a self-pairable device, the first sound device may directionally transmit the pairing request signal to the second sound device. Alternatively, when the first sound device identifies that a plurality of unpaired sound devices are within the self-pairable spatial range and are self-pairable devices, the first sound device may directionally transmit pairing request signals to the plurality of unpaired sound devices.

In step S350, the second sound device transmits a pairing confirmation signal to the first sound device. In some embodiments, in a case where the second sound device receives the pairing request signal transmitted by the first sound device, the second sound device may transmit the pairing confirmation signal to the first sound device. In some embodiments, before the second sound device transmits the pairing confirmation signal to the first sound device, the second sound device may determine, based on the received first wireless broadcast signal transmitted by the first sound device, whether the first sound device is within its self-pairable spatial range and whether the first sound device is a self-pairable device.

In step S360, the first sound device and the second sound device establish pairing. In some embodiments, the first sound device may establish pairing with the second sound device in response to the pairing confirmation signal from the second sound device.

In some embodiments, when the first sound device and the second sound device are successfully paired, one of the first sound device and the second sound device may be determined as a main sound device. The main sound device may transmit an audio signal to other sound devices paired with it. The main sound device may be determined by a user. For example, the user may determine one of the first sound device and the second sound device as the main sound device by means such as touch. The operation of determining the main sound device by the user may be performed before or after the first sound device and the second sound device establish pairing.

Alternatively, when the first sound device and the second sound device are successfully paired, one of the first sound device and the second sound device may also perform self-pairing with other unpaired sound devices.

In some embodiments, some of the steps shown in FIG. 3 may be omitted, performed in parallel, or may be performed in any order.

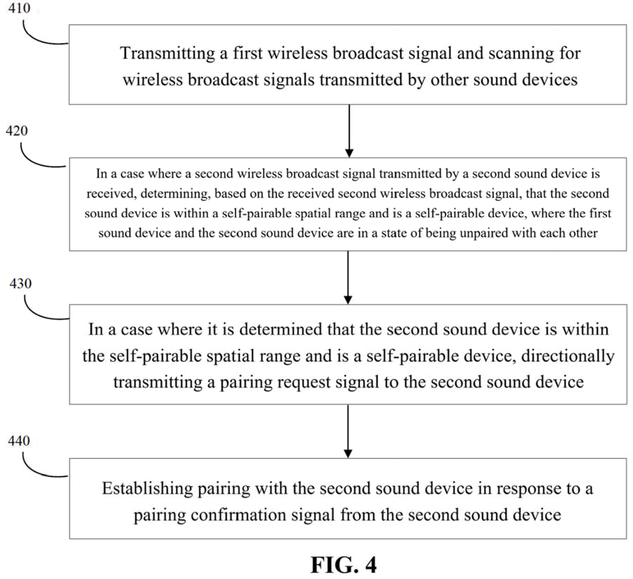

FIG. 4 illustrates a flowchart of a method for self-pairing of sound devices according to another embodiment of the present disclosure. The method shown in FIG. 4 may be performed by any sound device.

In step S410, a first sound device may transmit a first wireless broadcast signal and scan for wireless broadcast signals transmitted by other sound devices. The first sound device may continuously transmit the first wireless broadcast signal and may receive wireless broadcast signals transmitted by other sound devices.

In some embodiments, the first wireless broadcast signal may include identification information of the first sound device, and other wireless broadcast signals may include identification information of the sound device that transmits the wireless broadcast signal. The identification information may include at least one of a device name, a device address, and a device type of the sound device. However, the present disclosure is not limited thereto, and the identification information may include any information capable of uniquely identifying the sound device.

In step S420, in a case where a second wireless broadcast signal transmitted by a second sound device is received, the first sound device may determine, based on the received second wireless broadcast signal, that the second sound device is within a self-pairable spatial range and is a self-pairable device. At this time, the first sound device and the second sound device are in a state of being unpaired with each other.

The first sound device may determine the strength of the second wireless broadcast signal, and compare the strength of the second wireless broadcast signal with a strength threshold. Based on the strength of the second wireless broadcast signal being greater than or equal to the strength threshold and lasting for a threshold time, the first sound device may determine that the second sound device is within the self-pairable spatial range of the first sound device. In some embodiments, the strength threshold may be pre-configured to a value greater than a communicable strength threshold between the first sound device and the second sound device, for example, the strength threshold may be 5 times the communicable strength threshold.

Further, the first sound device may also determine, based on identification information of the second sound device included in the second wireless broadcast signal, that the second sound device is a self-pairable device. In some embodiments, the first sound device may be configured with a list of self-pairable devices, and may determine, based on the identification information of the second sound device and the list of self-pairable devices, whether the second sound device is a self-pairable device.

In step S430, in a case where the first sound device determines that the second sound device is within the self-pairable spatial range and is a self-pairable device, the first sound device directionally transmits a pairing request signal to the second sound device. Alternatively, when the first sound device identifies that a plurality of unpaired sound devices are within the self-pairable spatial range and are self-pairable devices, the first sound device may directionally transmit pairing request signals to the plurality of unpaired sound devices.

In step S440, the first sound device may establish pairing with the second sound device in response to a pairing confirmation signal from the second sound device.

When the first sound device and the second sound device are successfully paired, one of the first sound device and the second sound device may be determined as a main sound device. The main sound device may transmit an audio signal to other sound devices paired with it. In some embodiments, the main sound device may be determined by a user. For example, the user may determine one of the first sound device and the second sound device as the main sound device by means such as touch. The operation of determining the main sound device by the user may be performed before or after the first sound device and the second sound device establish pairing.

Alternatively, after successfully pairing with the second sound device, the first sound device may also perform self-pairing with other unpaired sound devices.

In some embodiments, some of the steps shown in FIG. 4 may be omitted, performed in parallel, or may be performed in any order.

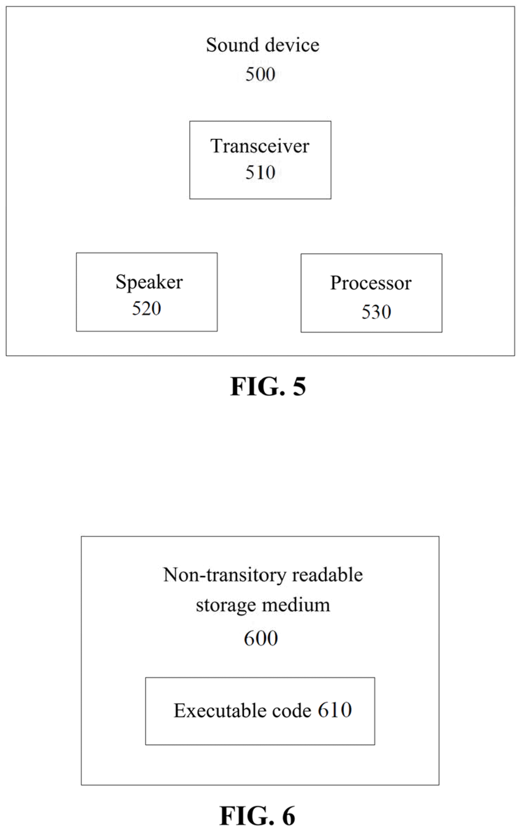

FIG. 5 illustrates a schematic diagram of a sound device according to an embodiment of the present disclosure.

As shown in FIG. 5, a sound device 500 may include a transceiver 510, a speaker 520, and a processor 530. The transceiver 510 may be configured to receive and transmit wireless broadcast signals and audio signals. The speaker 520 may be configured to output audio signals. The processor 530 may have executable code stored thereon, where when the code is executed, the sound device 500 is caused to perform the method as described above. It can be understood that the sound device 500 may include more components than those shown in FIG. 5.

In some embodiments, the transceiver 510 may be a wireless transceiver, and may transmit and receive wireless broadcast signals.

In some embodiments, the processor 530 may be a general-purpose processor or a dedicated processor, and may control other components in the sound device 500 to perform required functions.

It should be noted that, in the embodiments of the present disclosure, the specific functions and technical effects of the sound device 500 can be referred to the above description regarding FIG. 1 to FIG. 4, and will not be repeated here.

FIG. 6 illustrates a schematic diagram of a non-transitory computer-readable medium according to an embodiment of the present disclosure.

As shown in FIG. 6, a non-transitory readable storage medium 600 has executable code 610 stored thereon, and when the executable code 610 is executed, it may cause a sound device to perform one or more steps of the self-pairing method and additional aspects thereof as described above.

As an example, the non-transitory readable storage medium 600 may be any combination of one or more computer-readable storage media.

The technology of the present disclosure may include additional aspects, such as any single aspect or any combination of aspects described below and/or aspects related to one or more other processes described elsewhere herein.

Those of ordinary skills in the art may recognize that the units and algorithm steps of the various embodiments described in conjunction with the embodiments disclosed in the present disclosure can be implemented in electronic hardware, computer software or a combination thereof. In order to clearly illustrate the interchangeability of hardware and software, the composition and steps of the various embodiments have been generally described in terms of functionality in the foregoing description. Whether these functions are implemented in hardware or in software depends on the specific application of the technical solutions and design constraint conditions. Skilled professionals may use different methods to implement the described functions for each specific application, but such implementation should not be considered as going beyond the scope of the present disclosure.

Those skilled in the art may clearly understand that, for convenience and brevity of the description, the specific operation processes of the systems, apparatuses and units described above may be referred to the corresponding processes in the foregoing method embodiments, and will not be described in detail here.

In the embodiments provided in the present disclosure, it should be understood that the disclosed systems, apparatuses and methods can be implemented in other ways. For example, the apparatus embodiments described above are merely illustrative. For instance, the division of units is merely the division of logical functions. In actual implementations, there may be other division manners. For example, a plurality of units or assemblies may be combined or integrated into another system, or some features may be ignored or not executed. On the other hand, the mutual coupling or direct coupling or communicative connection shown or discussed may be indirect coupling or communicative connection via some interfaces, apparatuses or units, and may be electrical, mechanical or in other forms.

The units described as separate components may or may not be physically separate. The components shown as units may or may not be physical units, and may be located in one place or distributed onto a plurality of network units. Some or all of the units may be selected to achieve the purposes of the solutions of the embodiments according to actual needs.

In addition, various functional units in the various embodiments of the present disclosure may be integrated into one processing unit, or each unit may physically exist individually, or two or more units may be integrated into one unit. The integrated units described above may be implemented in the form of hardware or may be implemented in the form of software functional units.

If the integrated unit is implemented in the form of a software functional unit and sold or used as an independent product, it may be stored in a computer-readable storage medium. Based on such understanding, the technical solution of the present disclosure essentially, or the part contributing to the prior art, or all or part of the technical solution, may be embodied in the form of a software product. The computer software product is stored in a storage medium and includes several instructions for causing a computer device (which may be a personal computer, a server, or a network device, etc.) to perform all or part of the steps of the methods described in the various embodiments of the present disclosure. The aforementioned storage medium includes: various media capable of storing program codes, such as a USB flash drive, a removable hard disk, a read-only memory (ROM), a random access memory (RAM), a magnetic disk, or an optical disk.

The above descriptions are merely specific implementations of the present disclosure, but the scope of protection of the present disclosure is not limited thereto. Any person skilled in the art, within the technical scope disclosed in the present disclosure, could readily conceive of changes or substitutions, and such changes or substitutions shall fall within the scope of protection of the present disclosure. Therefore, the protection scope of the present disclosure should be determined by the protection scope of the claims.

## Claims

1. A method for self-pairing of sound devices, comprising:
transmitting, by a first sound device, a first wireless broadcast signal and scanning for wireless broadcast signals transmitted by other sound devices;
transmitting, by a second sound device, a second wireless broadcast signal and scanning for wireless broadcast signals transmitted by other sound devices;
in a case where the first sound device receives the second wireless broadcast signal transmitted by the second sound device, determining, by the first sound device based on the received second wireless broadcast signal, that the second sound device is within a self-pairable spatial range and the second sound device is a self-pairable device, wherein the first sound device and the second sound device are in a state of being unpaired with each other;
in a case where the first sound device determines that the second sound device is within the self-pairable spatial range and is a self-pairable device, directionally transmitting a pairing request signal to the second sound device by the first sound device;
in a case where the second sound device receives the pairing request signal transmitted by the first sound device, transmitting a pairing confirmation signal to the first sound device by the second sound device; and
establishing, by the first sound device, pairing with the second sound device in response to the pairing confirmation signal from the second sound device.

2. The method according to claim 1, further comprising:
determining one of the first sound device and the second sound device as a main sound device; and
transmitting, by the main sound device, an audio signal to the sound device paired with the main sound device.

3. The method according to claim 1 or 2, wherein the first wireless broadcast signal comprises identification information of the first sound device, and wherein the second wireless broadcast signal comprises identification information of the second sound device, wherein, in particular, the identification information comprises at least one of a device name, a device address, and a device type of the sound device.

4. The method according to any preceding claim, wherein determining, by the first sound device based on the received second wireless broadcast signal, that the second sound device is within the self-pairable spatial range comprises:
determining that the second sound device is within the self-pairable spatial range based on a strength of the second wireless broadcast signal being greater than a strength threshold and lasting for a threshold time, wherein the strength threshold is greater than a communicable strength threshold.

5. The method according to claim 3 or claim 4 when depending on claim 3, wherein determining, by the first sound device based on the received second wireless broadcast signal, that the second sound device is a self-pairable device comprises:
determining, based on the identification information, that the second sound device is a self-pairable device.

6. The method according to any preceding claim, further comprising:
after the first sound device establishes pairing with the second sound device, in a case where one of the first sound device and the second sound device receives a third wireless broadcast signal transmitted by a third sound device, determining, based on the third wireless broadcast signal by the sound device receiving the third wireless broadcast signal, that the third sound device is within the self-pairable spatial range and the third sound device is a self-pairable device, wherein the first sound device and the third sound device, and the second sound device and the third sound device are in a state of being unpaired with each other;
in a case where the sound device receiving the third wireless broadcast signal determines that the third sound device is within the self-pairable spatial range and is a self-pairable device, directionally transmitting a pairing request signal to the third sound device by the sound device receiving the third wireless broadcast signal;
in a case where the third sound device receives the pairing request signal transmitted by the sound device receiving the third wireless broadcast signal, transmitting a pairing confirmation signal to the sound device receiving the third wireless broadcast signal by the third sound device; and
establishing, by the sound device receiving the third wireless broadcast signal, pairing with the third sound device in response to the pairing confirmation signal from the third sound device.

7. The method according to any preceding claim, further comprising:
transmitting, by a third sound device, a third wireless broadcast signal and scanning for wireless broadcast signals transmitted by other sound devices;
in a case where the first sound device simultaneously receives the second wireless broadcast signal and the third wireless broadcast signal, determining, by the first sound device based on the received second wireless broadcast signal and third wireless broadcast signal, respectively, that the second sound device and the third sound device are within the self-pairable spatial range and the second sound device and the third sound device are self-pairable devices, wherein the first sound device, the second sound device, and the third sound device are in a state of being unpaired with each other;
in a case where the first sound device determines that the second sound device and the third sound device are within the self-pairable spatial range and are self-pairable devices, directionally transmitting a pairing request signal to the second sound device and the third sound device by the first sound device;
in a case where the second sound device and the third sound device respectively receive the pairing request signal transmitted by the first sound device, transmitting a pairing confirmation signal to the first sound device respectively by the second sound device and the third sound device; and
establishing, by the first sound device, pairing with the second sound device and the third sound device respectively in response to the pairing confirmation signals from the second sound device and the third sound device.

8. The method according to claim 6 or 7, further comprising:
determining one of the first sound device, the second sound device, and the third sound device as a main sound device; and
transmitting, by the main sound device, an audio signal to the sound device paired with the main sound device,
wherein, in particular, the main sound device is designated by a user.

9. A method performed by a first sound device, comprising:
transmitting a first wireless broadcast signal and scanning for wireless broadcast signals transmitted by other sound devices;
in a case where a second wireless broadcast signal transmitted by a second sound device is received, determining, based on the received second wireless broadcast signal, that the second sound device is within a self-pairable spatial range and is a self-pairable device, wherein the first sound device and the second sound device are in a state of being unpaired with each other;
in a case where it is determined that the second sound device is within the self-pairable spatial range and is a self-pairable device, directionally transmitting a pairing request signal to the second sound device; and
establishing pairing with the second sound device in response to a pairing confirmation signal from the second sound device.

10. The method according to claim 9, wherein the first wireless broadcast signal comprises identification information of the first sound device, and wherein the second wireless broadcast signal comprises identification information of the second sound device,
wherein, in particular, the identification information comprises at least one of a device name, a device address, and a device type of the sound device, and/or
wherein in particular, determining, based on the received second wireless broadcast signal, that the second sound device is a self-pairable device comprises determining, based on the identification information, that the second sound device is a self-pairable device.

11. The method according to claim 9 or 10, wherein determining, based on the received second wireless broadcast signal, that the second sound device is within the self-pairable spatial range comprises:
determining that the second sound device is within the self-pairable spatial range based on a strength of the second wireless broadcast signal being greater than a strength threshold and lasting for a threshold time, wherein the strength threshold is greater than a communicable strength threshold.

12. The method according to any of claims 9 to 11, further comprising:
in a case of being determined as a main sound device, transmitting an audio signal to the sound device paired with the main sound device.

13. The method according to any of claims 9 to 12, further comprising:
after establishing pairing with the second sound device, scanning for wireless broadcast signals transmitted by other sound devices;
in a case where a third wireless broadcast signal transmitted by a third sound device is received, determining, based on the received third wireless broadcast signal, that the third sound device is within the self-pairable spatial range and the third sound device is a self-pairable device, wherein the first sound device and the third sound device, and the second sound device and the third sound device are in a state of being unpaired with each other;
in a case where it is determined that the third sound device is within the self-pairable spatial range and is a self-pairable device, directionally transmitting a pairing request signal to the third sound device; and
establishing pairing with the third sound device in response to a pairing confirmation signal from the third sound device.

14. The method according to any of claims 9 to 13, further comprising:
in a case where the second wireless broadcast signal transmitted by the second sound device and a third wireless broadcast signal transmitted by a third sound device are simultaneously received, determining, based on the received second wireless broadcast signal and third wireless broadcast signal, respectively, that the second sound device and the third sound device are within the self-pairable spatial range and the second sound device and the third sound device are self-pairable devices, wherein the first sound device, the second sound device, and the third sound device are in a state of being unpaired with each other;
in a case where it is determined that the second sound device and the third sound device are within the self-pairable spatial range and are self-pairable devices, directionally transmitting a pairing request signal to the second sound device and the third sound device; and
establishing pairing with the second sound device and the third sound device respectively in response to pairing confirmation signals from the second sound device and the third sound device.

15. A sound device, comprising:
a transceiver;
a speaker; and
a processor having executable code stored thereon, wherein the code, when executed, causes the sound device to perform the method of any one of claims 9 to 14.
